# EUROPÄISCHE PATENTSCHRIFT

(11) **EP 0 837 379 B1**
(45) Veröffentlichungstag und Bekanntmachung des Hinweises auf die Patenterteilung: **21.11.2001**
(21) Anmeldenummer: 97115681.5
(22) Anmeldetag: 10.09.1997
(51) Int. Cl.: G05B 19/416

(54) **Hydraulische Transferpresse**
Hydraulic transfer press
Presse hydraulique à transfert

(30) Priorität: 17.10.1996 DE 19642962
(43) Veröffentlichungstag der Anmeldung: 22.04.1998
(73) Patentinhaber: Müller-Weingarten AG, 88250 Weingarten (DE)
(72) Erfinder: Wagner, Wilhelm, 88250 Weingarten (DE); Ilg, Eckhard, 73669 Lichtenwald (DE)
(74) Vertreter: Patentanwälte Eisele, Otten, Roth & Dobler

(56) Entgegenhaltungen:
- EP-A- 0 531 653
- EP-A- 0 573 903
- DE-A- 3 425 066
- DE-A- 4 121 841

## Beschreibung

Die Erfindung betrifft eine hydraulische Transferpresse nach dem Oberbegriff des Anspruchs 1.

Die Bearbeitung von Werkstücken und insbesondere von großflächigen Blechteilen erfolgt z.B. in mechanisch oder hydraulisch angetriebenen Stufenpressen. Zur Koordinierung der sich überlagernden Bewegungsabläufe der Pressenstößelbewegungen sowie der Transportbewegungen des Werkstücks sind insbesondere bei mechanischen Pressen Antriebssteuerungen bekannt geworden, die in Abhängigkeit der Phasenlage des Kurbelwellenexzenters eine genaue Lageerkennung des Pressenstößels in jeder Lage erlauben, so daß der Transfer hiervon abhängig gesteuert werden kann. Hierbei ist es wichtig, daß alle Achsen synchron und ohne sich gegenseitig zu behindern, in Abhängigkeit von der Pressenstößelbewegung gesteuert werden (siehe DE 41 21 841 A 1).

Aus der EP 0 573 903 B 1 sind weiterhin Transfersysteme bekannt geworden, bei welchen unter anderem die mechanische Kopplung zwischen Umformbewegung und Werkstücktransportbewegung aufgehoben und dennoch eine vollständige Synchronisation erreicht wird. Dies geschieht durch Verknüpfung von Master-Slave-Systemen, wobei die Umformbewegung der Presse als Master-System eingerichtet ist, dem die Bewegungsachsen für den Werkstücktransport als Slave-Systeme folgen. Dies stellt prinzipiell eine Folgesteuerung dar, wobei die Bewegung des Pressenstößels mittels eines Leitwellengebers erfaßbar ist und zur Synchronisation der Bewegungsachsen verwendet wird.

Bei mechanischen Pressen ist eine derartige Anordnung möglich, da aufgrund der Kurbelwellenbewegung jeder Bewegungsabschnitt des Pressenstößels unmißverständlich erfaßt und auswertbar ist (siehe auch DE 37 03 920 A 1).

Bei mechanischen Pressen wird demzufolge die Koordinierung bzw. Synchronisierung der Bewegungen von Presse und Transfer über eine Art Positionsgeber bewerkstelligt, der prinzipiell in Abhängigkeit der Antriebswelle arbeitet. Mit einem solchen Leitwellengeber als Leitachse lassen sich über entsprechende Regelstrategien auf elektronischem Wege sehr gut optimierte Synchronisationen der Bewegungssysteme erreichen.

Bei hydraulischen Pressen besteht eine solche Möglichkeit aufgrund der fehlenden Antriebswelle nicht. Bei dem Bewegungsprofil des Stößels ist kein kontinuierlicher Lauf über den gesamten Zyklus gegeben. Insbesondere im unteren und oberen Totpunkt des Pressenstößels bleibt dieser in seiner Lage über einen bestimmten Zeitraum stationär stehen, da der hydraulische Antriebszylinder in seiner Bewegungsrichtung umgesteuert werden muß, was eine bestimmte Zeit erfordert. Kommt es aber zum Stößelstillstand, so kann diese Zeitphase nicht zur Steuerung des Bewegungsablaufes des Transfers verwendet werden, d. h. es stellt sich ein undefinierter Zustand ohne Bewegungssignal des Pressenstößels ein. In diesem zeitlichen Intervall müßte auch der Transfer stehen bleiben, bzw. er ist nicht in Abhängigkeit der Stößelbewegung regelbar.

Bei hydraulischen Pressen erfolgt demzufolge die Koordination der Bewegungen beispielsweise über einen mechanischen Abgriff der Stößelbewegung. Meßwertgeber für Stößel und Transfer in Verbindung mit einer Steuerung synchronisieren die entsprechenden Achsbewegungen und steuern Antriebsmotore (DE-OS 22 32 469). Nachteilig an dieser Lösung ist die Abhängigkeit von der Stößelbewegung, die insbesondere in den systembedingten Haltezeiten im oberen und unteren Umkehrpunkt keine Signale liefert. Es muß mit einem relativ großen Sicherheitsabstand gearbeitet werden, was zu längeren Taktzeiten und einer reduzierten Teileausbringung führt.

Der Erfindung liegt die Aufgabe zugrunde, die Synchronisation und Koordinierung der Bewegungen sowohl von Presse als auch des Transfers bei hydraulischen Pressen und automatisierten hydraulischen Pressenstraßen zu verbessern, wobei auch die Zeiträume des Stößelstillstands der Presse zu berücksichtigen sind.

Diese Aufgabe wird ausgehend von einer hydraulischen Presse, ansferpresse oder Pressenstraße nach dem Oberbegriff des Anspruchs 1 durch die kennzeichnenden Merkmale gelöst.

In den Unteransprüchen sind vorteilhafte und zweckmäßige Weiterbildungen der erfindungsgemäßen Einrichtung angegeben.

Eine Steigerung der maximal möglichen Hubzahl und damit der Produktivität bei einer Transferpresse kann durch folgende reglungstechnische Maßnahmen ermöglicht werden:

Zum einen sollte ein energiesparender hydraulischer Antrieb, insbesondere Hybridantrieb, mit hoher Hubzahl bei reduzierter, installierter Antriebsleistung verwendet werden.

Weiterhin sollte ein spezielles Regelkonzept für die Stößellageregelung während des gesamten Hubes verwendet werden.

Eine elektronische Transferregelung mit einzeln geregelten Achsen bei hoher Dynamik in Abstimmung mit der Pressensteuerung ist ebenfalls zweckmäßig.

Schließlich sollte eine hochgenaue elektronische Synchronisation zwischen Presse und Transfer für einen Betrieb mit optimaler Freigängigkeit gewährleistet sein.

Obenstehende Forderungen können für eine hohe Produktivität der Transferpresse mittels eines leistungsfähigen hydraulischen Antriebs sorgen, wobei entsprechend hohe Hubzahlen ermöglicht werden. Die vom Antrieb her realisierbaren Hubzahlen können allerdings nur dann optimal umgesetzt werden, wenn auch der Transfer die entsprechende Dynamik besitzt und vollkommen synchron während des gesamten Stößelhubes sowie ohne ruckartige Bewegungen den Transport ausführt und damit eine geringe Freigängigkeit ermöglicht. Voraussetzung für eine optimale elektronische Synchronisation ist dabei die Lageregelung des Pressenstößels während des gesamten Hubes sowie der in allen Achsen geregelte Transfer.

Insbesondere die Synchronisation von Presse und Transfer erfolgt erfindungsgemäß durch eine in der Steuerung simulierte Leitwelle, die als sogenannte "virtuelle Leitwelle" bezeichnet wird. Damit wird auf elektronischem Wege eine Synchronisation erreicht, die vergleichbar ist mit der einer mechanischen Transferpresse mit elektronischem Transfer bei der die Stößellage über die Kurbelwelle mittels Drehmelder abgefragt wird.

Der Grundgedanke der elektronischen Synchronisation zwischen Presse und Transfer besteht demzufolge darin, daß die beiden Systeme, die jeweils als eigenständige Einheiten zu betrachten sind, über eine simulierte Leitwelle, gebildet z.B. durch einen Taktgeber, verbunden werden. Diese wird aufgrund von Prozessdaten gebildet und als "virtuelle Leitwelle (VL)" bezeichnet.

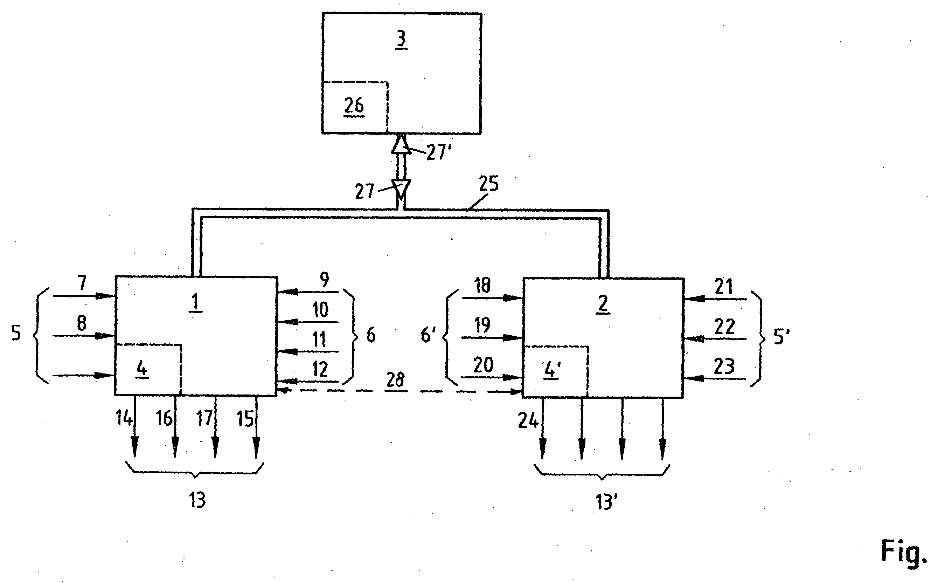

Weitere Einzelheiten und Vorteile der Erfindung werden anhand eines Ausführungsbeispiels mit der Darstellung in einer Prinzipskizze erläutert.
Die Figur zeigt eine prinzipielle Anordnung des Synchronisationsprinzips zwischen Pressensteuerung und Transfersteuerung.

Wie zuvor schon beschrieben, werden die unabhängigen Bewegungen von Presse und Transfer synchronisiert durch Bildung einer Art "virtuellen Leitwelle (VL)", die als Taktgeber arbeitet. Dabei werden die Bewegungsprofile von Presse x_{P} und Transfer x_{T} als Funktion der "Leitwelle" x_{P} = f (VL) und x_{T} = f (VL) tabellarisch abgelegt. Im jeweiligen Lageregeltakt werden aus den in der Steuerung abgelegten Bewegungsprofilen für Stößel und Transfer die der aktuellen Position der virtuellen Leitwelle entsprechenden Positionswerte generiert und den Regelachsen als Sollwerte vorgegeben. Die auf diese Weise bestimmten Werte dienen als Führungsgröße für die Regelalgorithmen der Presse und des Transfers. Hiermit ist eine enge zeitliche und räumliche Kopplung der Systeme gegeben. Da der Bewegungsablauf im Lageregeltakt erfolgt, ist demzufolge ein absolut synchroner Gleichlauf von Presse und Transfer gewährleistet. Freigängigkeiten wie bei der mechanischen Transferpresse ermöglichen entoprechend hohe Hubzahlen.

Die Figur zeigt eine prinzipielle Darstellung der Steuerung der hydraulischen Transferpresse mit einer Pressensteuerung 1, einer Transfersteuerung 2 sowie einer Bewegungskoordinierung 3.

Die Pressensteuerung 1 beinhaltet im wesentlichen einen Pressenrechner 4 mit Lageregelung des Pressenstößels, wodurch die Lage des Stößels über den gesamten Hub sehr genau erfaßbar ist und geregelt wird. Dabei ist die Stößel-Fahrkurve programmierbar und wird in der Steuerung abgelegt. Eine adaptive Vor Steuerung ermöglicht eine nahezu schleppfehlerfreie Achsregelung und ist eine wichtige Voraussetzung für eine elektronische Synchronisation.

Der Pressenrechner 4 wird beeinflußt von Eingangsgrößen wie Ist-Werten 5 und Soll-Werten 6, wobei als Ist-Werte beispielsweise der Stößelweg 7, der Druck des Antriebszylinders 8 eingebbar ist; als Soll-Werte kommen zur Pressensteuerung Bewegungsprofile 9 oder Bewegungsgesetze sowie Wertetabellen 10, Werkzeugkodierungen 11 oder Stößelfahrkurven 12 in Betracht. Aus diesen Ist- und Sollwerten 5, 6 kann der Pressenrechner 4 Regelungsgrößen 13 als Ausgangsgrößen errechnen, die beispielsweise die genauen Bewegungen der einzelnen Bewegungsachsen 14 oder den Zylinderdruck 15 bestimmen. Weitere Regelgrößen 16, 17 sind möglich.

Nach dem gleichen Prinzip wie die Pressensteuerung 1 weist die Transfersteuerung 2 als Eingangsgrößen eine Ist-Wert-Eingabe 5' und eine Soll-Wert-Eingabe 6' auf, die zu Regelgrößen 13' als Ausgangsdaten führen. Gleichermaßen erfolgt eine Programmierung mit den Bewegungsgesetzen 18 bzw. Bewegungsprofilen der Transferachsen, die Eingabe von Wertetabellen 19 oder sonstige Ansteuerungsparameter 20. Vorgesehen ist auch eine Geschwindigkeits- und Beschleunigungsüberwachung oder eine Kollisionsüberwachung ähnlich wie bei der Pressensteuerung. Als Ist-Werte kommen gleichermaßen Wegkenngrößen 21 in Betracht oder weitere Geschwindigkeits- oder Beschleunigungsgrößen 23. Als aus den Ist- und Soll-Werten resultierende Regelgrößen 13' der Transfersteuerung folgen genaue Achsenbewegungen 24. Dabei wird jede der Transferachsen (Vorschub-, Schließ- und Hebebewegung) einzeln angetrieben und geregelt. Der Bewegungsablauf des elektronischen Transfers ist insbesondere unter dem Gesichtspunkt einer optimalen Nutzung der Pressen-Freigängigkeit abgeleitet und als komplexes Bewegungsgesetz 18 in dem Transferrechner 4' der Transfersteuerung 2 abgelegt.

Erfindungsgemäß muß nun die Pressensteuerung sowie Transfersteuerung miteinander synchronisiert werden, was durch die Bewegungskoordinierung 3 über die Datenleitung 25 erfolgt. Dabei ist die Bewegungskoordinierung 3 im. wesentlichen als sogenannte virtuelle Leitwelle 26 ausgebildet, die in Form eines Taktgebers mit einer hohen Auflösung die Synchronisation ermöglicht. Die Synchronisation von Presse und Transfer erfolgt dabei durch eine in der Steuerung simulierte Leitwelle, die eine hohe Anzahl Synchronisationspunkte für Stößel und Transfer während eines Hubes generiert. Im jeweiligen über die Datenleitung 25 vorgegebenen Reglertakt der Pressensteuerung 1 und Transfersteuerung 2 wird ständig die aktuelle Position der virtuellen Leitwelle gelesen und hiermit die entsprechenden Soll-Positionen aus den Tabellen ermittelt. Die auf diese Weise bestimmten Werte dienen als Führungsgröße für die Regelalgorithmen sowohl von Presse als auch des Transfers.

Die Bewegungskoordinierung 3 stellt demzufolge mit ihrer "virtuellen Welle" 26 das Verbindungsglied zwischen Pressensteuerung und Transfersteuerung dar, wobei lediglich eine Synchronisation über einen Taktgeber erfolgt. Der eigentliche Steuerungsvorgang erfolgt in den Zentralrechnern der Pressensteuerung 1 und der Transfersteuerung 2, d. h. es findet eine echte Parallelsteuerung statt, die lediglich taktmäßig von der Bewegungskoordinierung 3 verknüpft wird. Unabhängig von jeglicher Stößelposition und insbesondere unabhängig von einem Stößelstillstand kann demnach eine Transfersteuerung erfolgen, da jedes System völlig unabhängig voneinander arbeitet. Lediglich der gemeinsame Taktgeber z.B. ein gemeinsamer Zeittakt koordiniert den genauen Bewegungsablauf von Presse und Transfer, so daß eine hochgenaue elektronische Synchronisierung von Presse und Transfer erzielt wird.

Die Erfindung ermöglicht darüber hinaus eine Schleppabstandsüberwachung. Hierfür wird die Hublage des Stößels anhand eines Toleranzbandes (maximaler Schleppabstand) über den gesamten Hub des Stößels überwacht. Beim Überschreiten des Toleranzbandes und damit des maximalen Schleppfehlers besteht Kollisionsgefahr und ein Notstop wird eingeleitet.

Umfassende Strategien zur Kollisionsvermeidung sowohl beim An- und Auslauf der Presse wie auch im Störungsfalle sorgen für einen sicheren Betrieb. So erfolgt beim Überschreiten von Grenzwerten in den einzelnen Bewegungsvorgängen bzw. Achsen automatisch eine Hubzahlanpassung. Löst der Bediener oder die Steuerung einen Notstop aus, so verhindern Bremsstrategien, daß Stößel, Werkzeug und Transfer miteinander kollidieren.

Der die virtuelle Leitwelle 26 bildende Taktgeber ist gemäß der Pfeildarstellung 27 als Taktvorgabe an den Pressenrechner 4 bzw. den Transferrechner 4' gerichtet. Entsprechend der umgekehrten Pfeildarstellung 27' kann die Bewegungskoordinierung 5 jedoch auch Störungsmeldungen oder sonstige Mitteilungen über die Kollisionsgefahr usw. aufnehmen. Hieraus resultieren dann abgegebene Start-, Stop- oder Not-Stop-Signale, die den Pressenrechner und/oder den Transferrechner erreichen. Auch ist ein Datenfluß (siehe Pfeil 28) direkt zwischen Pressen- und Transferrechner z.B. mit Stop- oder Störsignalen vorgesehen.

Entsprechend der Bewegungskoordinierung 3 kann auch eine Art "Echtzeitregelung" innerhalb eines Arbeitstaktes bzw. Arbeitszyklus durchgeführt werden, wobei Korrekturen des Bewegungsablaufes während des Betriebs nach Art einer Selbstkorrektur möglich sind. Die vorgegebenen Bewegungstoleranzbänder können dabei mit einer Bewertung versehen werden, die zu einer gegenseitigen Bewegungsbeeinflussung von Stößel und Transfer führen.

Es kann auch eine lernende Steuerung verwirklicht werden, die aufgrund des bekannten Bewegungsablaufes von Presse und Transfer und Angaben über die Werkzeuggeometrie Fahrkurven generiert mit dem Ziel einer optimalen Nutzung der Freigängigkeit bei größtmöglicher Hubzahl. Das bedeutet beispielsweise, daß die vorhandenen Bewegungs- und Geometrieinformationen dem Rechner eingegeben werden und durch eine von einem Rechner durchgeführte Bewegungssimulation jeglicher Art optimale Fahrkurven bzw. Bewegungsabläufe vom Rechner selbständig ermittelt werden. Mit vorhandenen Bewegungsabläufen sind insbesondere bekannte bzw. vorher ermittelte Kenndaten wie z.B. Stößelbeschleunigungen und/oder Transferdynamik gemeint.

Selbstverständlich können zur Sicherheit auch mehr als eine virtuelle Leitwelle als entsprechender Taktgeber vorgesehen sein, um ein hohes Maß an Sicherheit oder Kontrolle zu gewährleisten.

Die Erfindung ist nicht auf das dargestellte und beschriebene Ausführungsbeispiel beschränkt. Sie umfaßt auch vielmehr alle Weiterbildungen im Rahmen der Schutzrechtsansprüche.

## Patentansprüche

1. Hydraulische Presse insbesondere Transferpresse oder automatisierte hydraulische Pressenstraße mit wenigstens einer Bearbeitungsstation, die einen hydraulisch auf- und abwärts bewegbaren Pressenstößel für die Werkstückumformung aufweist und mit einem elektronisch gesteuerten Transfer zur Umsetzung des Werkstücks innerhalb der Presse, wobei Mittel zur Lageanpassung bzw. Synchronisation zwischen Pressenbewegung und Transferbewegung vorgesehen sind, **dadurch gekennzeichnet, daß** die Bewegungsprofile (6 bzw. 9, 10, 11, 12) der hydraulischen Presse und die Bewegungsprofile (6' bzw. 18, 19, 20) des Transfers jeweils über einen eigenständigen Rechner (4, 4') gesteuert werden und daß ein synchroner Gleichlauf zwischen Presse und Transfer mittels einer Art "virtuellen Leitwelle" (26) derart erfolgt, daß die Bewegungsprofile (6 bzw. 6'; 9, 10, 11, 12 bzw. 18, 19, 20) von Presse und Transfer als Regeltakt der "virtuellen Leitwelle" (26) gespeichert sind.

2. Presse nach Anspruch 1, **dadurch gekennzeichnet, daß** in einem vorgegebenen Regeltakt die zugehörigen aktuellen Positionswerte (5 bzw. 5'; 7, 8 bzw. 21, 22, 23) von Presse und Transfer gelesen und den Regelachsen von Presse und Transfer als Sollwerte (13 bzw. 13'; 14 - 17 bzw. 24) vorgegeben werden.

3. Presse nach Anspruch 1 oder 2, **dadurch gekennzeichnet, daß** die "virtuelle Leitwelle" (26) als Taktgeber regelt und insbesondere eine hohe Anzahl von Synchronisationspunkte für die Presse und den Transfer während eines Pressenhubes generiert.

4. Presse nach einem der Ansprüche 1 bis 3, **dadurch gekennzeichnet, daß** im Pressenrechner (4) und/oder im Transferrechner (4') jeweilige Bewegungsprofile oder Bewegungsgesetze (6, bzw. 6'; 9, 10, 11, 12 bzw. 18, 19, 20) als Funktion vom Regeltakt der "virtuellen Leitwelle" (26) gespeichert sind.

5. Presse nach einem der vorgenannten Ansprüche, **dadurch gekennzeichnet, daß** die Bewegungskoordinierung (3) zwischen Pressenrechner (4) und Transferrechner (4') eine Lagesignalvermittlung mittels einer, durch einen Taktgeber verwirklichten "virtuellen Leitwelle" (26) vollzieht und insbesondere Start-, Stop-, Not-Stop-Signale oder dergleichen an den Pressenrechner (4) bzw. Transferrechner (4') vermittelt.

6. Presse nach einem der vorgenannten Ansprüche, **dadurch gekennzeichnet, daß** die Bewegungskoordinierung (3) Informationssignale des Pressenrechners (4) bzw. des Transferrechners (4') als Fehlersignale, Signale über Kollisionsgefahr oder dergleichen aufnimmt und entsprechend in einem Fehlerprogramm verwertet.

7. Presse nach einem der vorgenannten Ansprüche, **dadurch gekennzeichnet, daß** die Informationssignale zwischen Pressenrechner (4) und Transferrechner (4') direkt austauschbar sind.

8. Presse nach einem der vorgenannten Ansprüche, **dadurch gekennzeichnet, daß** über vorgegebene Toleranzbander eine Bewegungsbeeinflussung von Presse bzw. Stößelbewegung und Transfer vorgesehen ist.

9. Presse nach einem der vorgenannten Ansprüche, **dadurch gekennzeichnet, daß** eine Beeinflussung der Bewegungen von Presse und/oder Transfer innerhalb eines Arbeitszyklus in Form einer "Echtzeitregelung" erfolgt.

10. Presse nach einem der vorgenannten Ansprüche, **dadurch gekennzeichnet, daß** zur Erreichung einer optimalen Freigängigkeit der Bewegungsabläufe bekannte Betriebsparameter erfaßt sind und durch eine von einem Rechner durchgeführte Bewegungssimulation jeglicher Art optimale Fahrkurven bzw. Bewegungsabläufe vom Rechner selbständig ermittelt werden.

## Claims

1. Hydraulic press, in particular transfer press or automated hydraulic press line with at least one processing station, which has a hydraulic press ram which can be moved up and down for forming the workpiece and with an electronically controlled transfer for transposition of the workpiece inside the press, means for positional adaptation or synchronisation between press movement and transfer movement being provided, **characterised in that** the movement profiles (6 and 9, 10, 11, 12) of the hydraulic press and the movement profiles (6' and 18, 19, 20) of the transfer are each controlled via an independent computer (4, 4') and **in that** a synchronicity is produced between the press and transfer by means of a type of "virtual waveguide" (26) in such a way that the movement profiles (6 and 6'; 9, 10, 11, 12 and 18, 19, 20) of press and transfer are stored as the control cycle of the "virtual waveguide" (26).

2. Press according to claim 1, **characterised in that**, in a predetermined control cycle, the associated current position values (5 and 5'; 7, 8 and 21, 22, 23) of press and transfer are read and the control axes of press and transfer are input as desired values (13 and 13'; 14 to 17 and 24).

3. Press according to claim 1 or 2, **characterised in that** the "virtual waveguide" (26) controls as a clock generator and, in particular, generates a large number of synchronisation points for the press and the transfer during a lift of the press.

4. Press according to any one of claims 1 to 3, **characterised in that** in the press computer (4) and/or in the transfer computer (4') respective movement profiles or movement laws (6, and 6'; 9, 10, 11, 12 and 18, 19, 20) are stored as a function of the control cycle of the "virtual waveguide" (26).

5. Press according to any one of the preceding claims, **characterised in that** the movement coordination (3) carries out a position signal communication between the press calculator (4) and transfer computer (4') by means of a "virtual waveguide" (26) produced by a clock generator and, in particular, communicates start, stop, do not stop signals or the like to the press computer (4) or transfer computer (4').

6. Press according to any one of the preceding claims, **characterised in that** the movement coordination (3) picks up data signals from the press computer (4) and the transfer computer (4') as fault signals, signals on risk of collision or the like and evaluates them accordingly in a fault programme.

7. Press according to any one of the preceding claims, **characterised in that** the data signals can be exchanged directly between the press computer (4) and transfer computer (4').

8. Press according to any one of the preceding claims, **characterised in that** an influencing of the movement of the press or ram movement and transfer is provided over predetermined tolerance bands.

9. Press according to any one of the preceding claims, **characterised in that** influencing of the movements of the press and/or transfer within an operating cycle takes place in the form of a "real time control".

10. Press according to any one of the preceding claims, **characterised in that** known operating parameters are detected to achieve an optimum freedom of the movement sequences and are independently determined by the computer by a movement simulation carried out by a computer of every possible type of optimum travel curve or movement sequence.

## Revendications

1. Presse hydraulique, en particulier presse de transfert ou train de presses hydraulique automatisé, ayant au moins un poste de traitement, qui présente un coulisseau déplaçable vers le haut et vers le bas de façon hydraulique pour la déformation des pièces et ayant un transfert, commandé de façon électronique, pour déplacer la pièce à l'intérieur de la presse, des moyens étant prévus pour l'adaptation en position et la synchronisation entre le mouvement de presse et le mouvement de transfert,
**caractérisée en ce que** les profils de mouvement (6 ou 9, 10, 11, 12) de la presse hydraulique et les profils de mouvement (6' ou 18, 19, 20) du transfert sont commandés, à chaque fois, par l'intermédiaire d'un calculateur original (4, 4'), et **en ce qu'**un synchronisme entre la presse et le transfert est obtenu au moyen d'une sorte d"'arbre de commande virtuel" (26), de sorte que les profils de mouvement (6 ou 6' ; 9, 10, 11, 12 ou 18, 19, 20) de la presse et du transfert sont mémorisés comme cycle de réglage de l'"arbre de commande virtuel" (26).

2. Presse selon la revendication 1,
**caractérisée en ce que**, dans un cycle de réglage prédéfini, les valeurs de position actuelles correspondantes (5 ou 5' ; 7, 8 ou 21, 22, 23) de la presse et du transfert sont lues et allouées aux axes de réglage de la presse et du transfert comme valeurs de consigne (13 ou 13' ; 14-17 ou 24).

3. Presse selon la revendication 1 ou 2,
**caractérisée en ce que** l'"arbre de commande virtuel" (26) fonctionne comme horloge et engendre en particulier un nombre élevé de points de synchronisation pour la presse et le transfert pendant une course de la presse.

4. Presse selon une des revendications 1 à 3,
**caractérisée en ce que**, dans le calculateur de presse (4) et/ou dans le calculateur de transfert (4'), sont mémorisés des profils de mouvement ou des lois de mouvement (6 ou 6' ; 9, 10, 11, 12 ou 18, 19, 20) respectifs comme fonction du cycle de réglage de l'"arbre de commande virtuel" (26).

5. Presse selon une des revendications précitées,
**caractérisée en ce que** la coordination de mouvement (3) entre le calculateur de presse (4) et le calculateur de transfert (4') effectue une transmission de signaux de position au moyen d'un "arbre de commande virtuel" (26), réalisé par une horloge, et transmet en particulier des signaux de départ, d'arrêt, de non-arrêt ou analogues au calculateur de presse (4) ou au calculateur de transfert (4').

6. Presse selon une des revendications précitées,
**caractérisée en ce que** la coordination de mouvement (3) reçoit des signaux d'information du calculateur de presse (4) ou du calculateur de transfert (4') comme signaux d'erreur, signaux sur un risque de collision ou analogues et les utilise de façon correspondante dans un programme d'erreur.

7. Presse selon une des revendications précitées,
**caractérisée en ce que** les signaux d'information sont directement interchangeables entre le calculateur de presse (4) et le calculateur de transfert (4').

8. Presse selon une des revendications précitées,
**caractérisée en ce que**, par l'intermédiaire de bandes de tolérance prédéfinies, il est prévu une influence des mouvements de la presse ou des mouvements du coulisseau et du transfert.

9. Presse selon une des revendications précitées,
**caractérisée en ce qu'**une influence des mouvements de la presse et/ou du transfert est effectuée à l'intérieur d'un cycle de travail sous forme d'un "réglage en temps réel".

10. Presse selon une des revendications précitées,
**caractérisée en ce que**, pour atteindre une liberté optimale des allures de mouvement, des paramètres de fonctionnement connus sont détectés et, par ùne simulation de mouvement effectuée par un calculateur, tous les types de courbes de déplacement ou profils de mouvement optimaux sont déterminés automatiquement par le calculateur.
